# EUROPEAN PATENT SPECIFICATION

(11) **EP 4 039 785 B1**
(45) Date of publication and mention of the grant of the patent: **08.01.2025**
(21) Application number: 20872469.0
(22) Date of filing: 09.09.2020
(51) Int. Cl.: C12G 3/04, A23L 27/00, C12G 3/06

(54) **PACKAGED ALCOHOLIC BEVERAGE**
VERPACKTES ALKOHOLISCHES GETRÄNK
BOISSON ALCOOLISÉE CONDITIONNÉE

(30) Priority: 30.09.2019 JP 2019180117
(43) Date of publication of application: 10.08.2022
(73) Proprietor: Suntory Holdings Limited, Osaka 530-8203 (JP)
(72) Inventor: YOSHIHARA, Kazuki, Kawasaki-shi, Kanagawa 211-0067 (JP); OCHI, Naoko, Kawasaki-shi, Kanagawa 211-0067 (JP)
(74) Representative: Vossius & Partner Patentanwälte Rechtsanwälte mbB
(86) International application number: PCT/JP2020/034034
(87) International publication number: WO 2021/065386

(56) References cited:
- EP-A1- 2 180 036
- CN-A- 102 191 159
- CN-A- 107 083 311
- JP-A- 2010 260 944
- KR-A- 20040 003 228
- KR-A- 20050 075 166
- KR-B1- 100 672 016

## Description

### TECHNICAL FIELD

The present invention relates to an alcoholic beverage and a method for producing the same. More particularly, this invention relates to an alcoholic beverage having a reduced sensation of piquant pungency while retaining its clean aroma.

### BACKGROUND ART

In recent years, low-alcohol beverages typified by shochu-based cocktails have been increasingly consumed instead of beer-flavored alcoholic beverages such as beers and low-malt beers. Among such shochu-based cocktails, those with a lower alcohol content and a mild quality are becoming increasingly popular.

A possible reason for this change in consumer needs may be that consumers may dislike and avoid the bitterness of hops used in beer-flavored alcoholic beverages, and the sensation of pungency caused by the pungent odor and bitterness of an alcohol present in low-alcohol beverages such as shochu-based cocktails.

Under these circumstances, one of the challenges faced by the liquor industry is to provide mild and easy-to-drink alcoholic beverages, in which such a sensation of pungency as mentioned above, particularly a pungent alcohol odor, is reduced, with a view to maintaining and increasing the consumption of liquors. In particular, many consumers mainly including young people are prominently getting uninterested in drinking liquors, and thus, a rapid solution to address the situation is needed.

Various attempts have been made to reduce or eliminate a pungent alcohol odor. For example, PTL 1 discloses a method for improving the taste and aftertaste of an alcoholic beverage through eliminating the unpleasant odor of the alcoholic beverage with addition of a fruit of paradicsom paprika. PTL 2 discloses a method for making an alcohol-containing beverage or food taste mild through alleviating the alcohol odor and pungency of the beverage or food by adding to the beverage or food a glucan having a degree of polymerization of not less than 50 and containing an internally branched cyclic structural segment and an externally branched cyclic structural segment. PTL 3 discloses a method for improving the pungent odor of an alcohol-containing beverage or food through addition of betaine, which is an amino acid. PTL 4 discloses a method for reducing alcohol pungency in an alcoholic beverage through addition of fruit juice components.

### CITATION LIST

### PATENT LITERATURES

PTL 1: Japanese Unexamined Patent Application Publication No. JP H10-313849
PTL 2: Japanese Unexamined Patent Application Publication No. JP 2003-289824
PTL 3: Japanese Unexamined Patent Application Publication No. JP 2003-204779
PTL 4: European Patent Application Publication No. EP 2 180 036 A1

### SUMMARY OF INVENTION

### TECHNICAL PROBLEM

All of the techniques disclosed in the aforementioned prior art references aim at reducing pungent alcohol odor or the like through addition of a special taste substance. Such masking of alcohol pungency with addition of a taste component has a not insignificant impact on the taste and aroma of beverages. It is not much preferable to add even the slightest aroma to a beverage, since the addition of aroma may disrupt a delicate balance in product design quality, leading to unexpected change in aroma.

Also, there are cases where a strong pungent alcohol odor is felt when packaged alcoholic beverages like canned beverages are opened. In such packaged alcoholic beverages, a technique for effectively reducing piquant alcohol odor is demanded.

In view of these circumstances, an object of the present invention is to provide a technique that can reduce the pungent alcohol odor of a packaged alcoholic beverage while allowing the beverage to retain its clean aroma.

### SOLUTION TO PROBLEM

The present inventors have made intensive studies to achieve the aforementioned object, and as a result, found that, by adding a very small amount of chitosan to a packaged alcoholic beverage, pungent alcohol odor can be effectively reduced without a significant effect on the aroma of the alcoholic beverage.

The present invention includes, but is not limited to, the following embodiments.
(1) A packaged alcoholic beverage having a chitosan content of from 0.1 to 5 ppm and an alcohol content of from 1 to 10 v/v%.
(2) The beverage as set forth in (1), wherein the beverage is an unheated packaged alcoholic beverage.
(3) The beverage as set forth in (1) or (2), wherein the chitosan has a molecular weight of from 1 to 100 kDa.
(4) The beverage as set forth in any of (1) to (3), wherein the beverage contains one or more acidulants selected from citric acid, malic acid, and lactic acid.
(5) A method for producing a packaged alcoholic beverage, the method comprising the step of preparing an alcoholic beverage having a chitosan content of from 0.1 to 5 ppm and an alcohol content of from 1 to 10 v/v%.
(6) A method for reducing a sensation of alcohol pungency in a packaged alcoholic beverage, the method comprising the step of adding from 0.1 to 5 ppm of chitosan to an alcoholic beverage having an alcohol content of from 1 to 10 v/v%.

### ADVANTAGEOUS EFFECTS OF INVENTION

According to the present invention, by adding chitosan, a naturally occurring ingredient, to a packaged alcoholic beverage, a sensation of piquant pungency derived from an alcohol can be effectively improved while the beverage is allowed to retain its clean aroma.

### DESCRIPTION OF EMBODIMENTS

### Packaged alcoholic beverage

The present invention is directed to a packaged alcoholic beverage. The type of an alcohol that can be used in this invention is not particularly limited. Any of brewages or distilled liquors may be used alone or in combination with each other. Examples of alcohols that can be used include: brewer's alcohols, spirits (*e.g*., refined spirits such as gin, vodka, rum, tequila and new spirits, and feedstock alcohols), liqueurs, whiskeys (*e.g*., whiskey, brandy), and shochu (continuous distilled shochu (so-called "Ko-type shochu") and single distilled shochu (so-called "Otsu-type shochu"), with further examples being brewages such as refined sake, wine, and beer. *Inter alia,* some types of distilled liquors are stronger in pungent alcohol odor than brewages. Thus, it is preferable to apply this invention to a beverage containing a distilled liquor, since the effect of this invention can be effectively obtained.

The alcoholic beverage of the present invention has an alcohol content of from 1 v/v% to 10 v/v%. In this invention, the alcoholic beverage has an alcohol content of preferably from 1.5 v/v% to 8.5 v/v%, more preferably from 3.0 v/v% to 7.0 v/v%. The alcohol content of the alcoholic beverage can be measured by, for example, a vibrational densimeter. In order to measure alcohol content, a sample is distilled under direct fire, and then, the density at 15°C of the resulting distillate is measured and converted to an alcohol content according to Table 2 "Conversion among Alcohol Content, Density (15°C) and Specific Gravity (15/15°C)" which is annexed to the Official Analysis Method of the National Tax Agency in Japan (National Tax Agency Directive No. 6 in 2007, revised on June 22, 2007).

The alcoholic beverage of the present invention is a packaged beverage, which is a beverage packed in a package. The form of a package is not limited in any way, and the package can be provided in any commonly used forms such as glass bottles, plastic-based molded packages, metal cans, and laminated paper packages with a metal foil or plastic film laminated thereon.

The beverage of the present invention may have carbon dioxide gas incorporated therein. Incorporation of carbon dioxide gas enhances the clean sensation of a beverage. Carbon dioxide gas can be incorporated in a beverage using a method commonly known to skilled artisans. Examples of such commonly known methods include, but are not limited to, the following: carbon dioxide may be dissolved in a beverage under pressure; carbon dioxide and a beverage may be mixed in piping using a mixer such as a carbonator produced by Tuchenhagen GmbH; a beverage may be sprayed into a tank filled with carbon dioxide to cause the beverage to absorb carbon dioxide; or a beverage may be mixed with carbonic water. Any of such means is used, as appropriate, to adjust the pressure of carbon dioxide gas.

The pressure of carbon dioxide gas to be incorporated in the beverage of the present invention is not particularly limited, and is, for example, not less than 0.8 kgf/cm², and is preferably in the range of from 1.2 to 3.1 kgf/cm², at a beverage temperature of 20°C. Exemplary forms of the inventive beverage having carbon dioxide gas incorporated therein include so-called "Chu-hi", which is a shochu-based cocktail. Carbon dioxide gas pressure can be measured by a method known to skilled artisans -- for example, using a gas volume analyzer (*e.g*., GVA-500A, produced by Kyoto Electronics Manufacturing Co., Ltd.). More specifically, with the beverage temperature being adjusted to 20°C, a packaged beverage placed in the aforementioned gas volume analyzer is subjected to gas venting (snifting), followed by resealing and shaking, and then measured for carbon dioxide gas pressure. Unless otherwise specified herein, the carbon dioxide gas pressure refers to a carbon dioxide gas pressure at a beverage temperature of 20°C.

### Chitosan

The alcoholic beverage of the present invention comprises chitosan. Chitosan is a straight-chain polysaccharide, and is a 1,4-polymer of glucosamine. The molecular formula of chitosan is (C₆H₁₁NO₄)ₙ, and depending on its degree of polymerization, the molecular weight of chitosan may be even as high as several hundreds of thousands. In the present specification, any 1,4-polymer of glucosamine is referred to as "chitosan" regardless of its molecular weight and degree of polymerization.

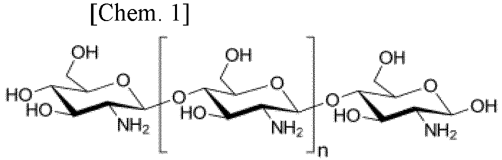

The molecular weight of chitosan to be added to the alcoholic beverage of the present invention is in the range of preferably from 1 to 1000 kDa, more preferably from 2 to 100 kDa, or may be in the range of from 3 to 30 kDa, or from 40 to 80 kDa. As long as it has such a molecular weight, chitosan can be used in the form of free amine or a salt with a suitable acid. Further, in a preferred embodiment, n (degree of polymerization) in the formula shown above is in the range of from 1 to 1000, more preferably from 2 to 800, still more preferably from 3 to 600. The form of a salt is not particularly limited as long as the salt can be used for edible purposes. Examples of a salt with an organic acid include, but are not limited to, acetates, lactates, and citrates. Examples of a salt with an inorganic acid include, but are not limited to, hydrochlorides and sulfates. Preferred salts are hydrochlorides.

Chitosan can be mainly obtained by deacetylating chitin, obtained from the exoskeleton of crustaceans including crab and lobster. In some cases, conversion (deacetylation) of chitin to chitosan does not take place completely, so that some quantity of N-acetylglucosamine remains on the sugar chain. For this reason, many commercial chitosan products include a notation of degree of deacetylation (%DA). Many commercial chitosan products have a %DA of from 60 to 100%.

In the present invention, the amount of chitosan added to the alcoholic beverage is in the range of from 0.1 to 5 ppm. Chitosan is substantially harmless as a food additive, but when chitosan is added in an amount exceeding 5 ppm, the aroma of an alcoholic beverage may be affected by the astringency derived from chitosan. In a preferred embodiment, the concentration of chitosan in the alcoholic beverage of this invention is in the range of from 0.5 to 3 ppm.

In the present invention, chitosan can be added at a suitable step during the process of production of beverages. Exemplary addition procedures include, but are not limited to, preliminary addition of chitosan to a source ingredient, addition of chitosan during the step of mixing source ingredients, and addition of chitosan after dissolution of mixed ingredients in water.

### Other components, and the like

Similarly to common beverages, the beverage of the present invention may have different additives added thereto to the extent that they do not impair the effects of this invention. Examples of different additives include, but are not limited to, acidulants, flavorings, vitamins, pigments, antioxidants, emulsifiers, preservatives, seasonings, essences, pH adjustors, thickeners, and quality stabilizers.

The alcoholic beverage of the present invention can be made into, for example, a citrus alcoholic beverage by addition of a flavoring and/or a fruit juice. As referred to above, the "citrus alcoholic beverage" refers to a beverage having a citrus fruit aroma, or in other words, a beverage having an aroma reminiscent of a citrus fruit upon drinking. Examples of citrus fruits include, but are not limited to: oranges (*Citrus sinensis*) such as Valencia orange and navel orange; various varieties of grapefruits; acid citrus fruits such as lemon, lime, flat lemon (*Citrus depressa*), bitter orange (*Citrus aurantium*), yuzu (*Citrus junos*), kabosu (*Citrus sphaerocarpa*), sudachi (*Citrus sudachi*), citron, and fingered (Buddha's hand) citron (*Citrus medica* var. *sarcodactylis*); miscellaneous citrus fruits such as natsudaidai orange (*Citrus natsudaidai*), hassaku orange (*Citrus hassaku*), hyuganatsu orange (*Citrus tamurana*), oroblanco (sweetie), and shiranuhi (dekopon); tangors such as iyokan orange (*Citrus iyo*) and tankan orange (*Citrus tankan*); satsuma oranges such as mandarin orange, unshiu orange (*Citrus unchiu*), ponkan (*Citrus reticulata* var. *poonensis*) and kishu mandarin (*Citrus kinokuni*); and kumquats such as Japanese kinkan.

Examples of a beverage having a citrus fruit aroma include, but are not limited to, beverages containing a citrus fruit pulp and/or juice, and beverages made of part of a citrus fruit itself. Also, the beverage having a citrus fruit aroma may contain no fruit juice as long as it gives off a citrus fruit aroma. Examples of such beverages containing no fruit juice include those containing an aroma component-containing essence extracted from a citrus fruit, and those containing a flavoring that artificially replicates an aroma component characteristic of a citrus fruit.

When a fruit juice is added to the alcoholic beverage of the present invention, the amount of a fruit juice added is not particularly limited, and is in the range of preferably from 0.01 to 30%, or may be not more than 20%, not more than 10%, or not more than 5%, in terms of straight fruit juice. With regard to the type of a fruit juice, the fruit juice can be of any forms, including a straight fruit juice used as freshly squeezed from a fruit, or a concentrated fruit juice obtained by concentrating straight fruit juice. Also, a cloudy fruit juice or a clear fruit juice may be used.

In the alcoholic beverage of the present invention, two or more types of fruit juices may be used. The amounts of fruit juices to be combined are not particularly limited. With regard to the types of fruit juices, the fruit juices can be of any forms, including a straight fruit juice used as freshly squeezed from a fruit, or a concentrated fruit juice obtained by concentrating straight fruit juice. Also, cloudy fruit juices or clear fruit juices may be used.

In a preferred embodiment, the alcoholic beverage of the present invention has a pH of from 2.0 to 4.5, more preferably from 2.1 to 4.0, still more preferably from 2.2 to 3.5. By adjusting pH to lie in such a range, a beverage particularly excellent in palatability can be obtained. If the beverage has a pH of less than 2.0, low pH may affect the taste of the beverage. If the beverage has a pH exceeding 4.5, the beverage may taste somewhat harsh.

The procedure for adjusting the pH of the beverage is not particularly limited, and the pH of the beverage can be adjusted using an agent commonly used for beverage pH adjustment, such as citric acid or trisodium citrate. Also, the pH of the beverage may be adjusted through adjustment of the contents of other components (*e.g*., fruit juice).

The pH of the beverage can be measured using a commercially available pH meter. During the process of beverage pH measurement, the beverage, when containing carbon dioxide gas, is subjected to degassing before measurement. The degassing procedure is not particularly limited, and carbon dioxide gas can be degassed by a common procedure such as sonication, aeration, or vacuum deaeration.

The acidity of the beverage of the present invention is adjusted to be in the range of preferably from 0.05 to 0.60 g/100 mL, more preferably from 0.10 to 0.50 g/100 mL, still more preferably from 0.15 to 0.45 g/100 mL, in terms of citric acid. By adjusting acidity to lie in such a range, a particularly easy-to-drink beverage with a moderately acidic taste can be obtained. The acidity of the beverage can be measured by a common titration method.

Examples of acidulants include, but are not limited to, different acids such as citric acid, succinic acid, lactic acid, malic acid, tartaric acid, gluconic acid, and phosphoric acid, or salts thereof. The amount of acidulant used is not uniquely determined and varies with the type of acidulant used and the like, but is typically in the range of from 0.01 to 5 mass%, preferably from 0.05 to 0.5 mass%, based on the amount of the beverage.

The beverage of the present invention may contain a sugar including glucose. Also, the beverage of this invention may contain one or more types of natural or artificial sweeteners.

In a preferred embodiment, the beverage of the present invention has a Brix value of not more than 10, preferably from 0.1 to 8, or may have a Brix of from 0.2 to 5. The concentration of soluble solids in solution can be evaluated by means of Brix values determined using a sugar content meter, refractometer, etc. The Brix is a value obtained by converting a refractive index measured at 20°C into a mass/mass percentage of sucrose in solution based on the conversion table published by ICUMSA (the International Commission for Uniform Methods of Sugar Analysis). The Brix is expressed in unit of "°Bx", "%" or "degree".

The beverage of the present invention may also be a low-solute beverage with a low concentration of soluble solids in solution -- thus, the beverage of this invention includes so-called low-calorie beverages labeled as "sugar-free", "saccharide-free", "low-calorie" or the like. The labelings as "sugar-free", "saccharide-free", "low-calorie" or the like are defined in the nutrition labeling standards as stipulated under the health promotion act. For example, the label as "sugar-free" is placed on beverages whose content of a sugar (which is a monosaccharide or disaccharide, and is not a sugar alcohol) is less than 0.5 g per 100 g of beverage. The label as "saccharide-free" is placed on beverages with a saccharide concentration of less than 0.5 g/100 mL. The "saccharide" is a type of carbohydrate which is one of the three major nutrients, and is a generic name for available carbohydrates calculated by subtracting dietary fiber content from total carbohydrates.

Similarly to common beverages, the alcoholic beverage of the present invention can be made into a packaged beverage through sterilization and other steps. For example, a sterilized packaged beverage can be produced by a method that involves performing heat sterilization by hot water shower or the like after a beverage is packed in a package, or a method that involves subjecting a beverage to heat sterilization followed by packaging. Also, an unheated packaged beverage can be produced without a heat sterilization step. As referred to in this invention, the term "unheated" means that no heating step is involved after the step of mixing source ingredients, regardless of whether a heating step is performed during the process of preparing source ingredients.

In one embodiment, the present invention can also be understood to be directed to a method for producing an alcoholic beverage. The method for producing an alcoholic beverage according to this invention comprises the step of adding a specified amount of chitosan and a specified amount of alcohol. The method for producing a packaged beverage comprises at least the step of packing a prepared beverage in a package.

The beverage of the present invention can be produced using a conventionally known method. Any skilled artisan can design, as appropriate, the conditions for a component mixing step, an optional sterilization step, and a packaging step.

In another embodiment, the present invention can also be understood to be directed to a method for reducing a sensation of pungency in a packaged alcoholic beverage, the method comprising the step of adding a specified amount of chitosan.

### EXAMPLES

Hereunder, the present invention will be described in more detail by way of specific experimental examples, but this invention is not limited to the specific examples given below. Unless otherwise stated herein, all concentrations and other like parameters are expressed on a mass basis, and all numerical ranges are inclusive of their endpoints.

### Experiment 1: Production and evaluation of packaged alcoholic beverages

Different packaged alcoholic beverages with an alcohol content of 5 v/v% were produced and evaluated based on the table given below. To be specific, an alcohol (neutral spirits; alcohol content: 59 v/v%), an acidulant (citric acid, malic acid, or lactic acid), and chitosan (average degree of polymerization: about 500; average molecular weight: about 60 kDa) were sequentially added to pure water to prepare alcoholic beverages. The prepared alcoholic beverages were packed in packages to give unheated packaged alcoholic beverages which were not subjected to heat sterilization. In this experiment, an acidulant was added to the beverages to a concentration of 0.3% (3000 ppm). The beverages had a pH of about 2.5, a Brix value of about 0.3, and an acidity of about 0.3 g/100 mL (in terms of citric acid).

The obtained beverage samples were subjected to sensory evaluation by four professional panelists to determine their sensation of pungency and aroma. To be specific, the beverage samples were rated according to the eight-point grading scale detailed below, with Sample No. 1-1 being used as a control. The final ratings were determined through mutual agreement among the four professional panelists.

### (Piquant pungency)

- 8 points: The sensation of pungency is the same as that of the control.
- 6 points: The sensation of pungency is somewhat reduced as compared to that of the control.
- 4 points: The sensation of pungency is reduced as compared to that of the control.
- 2 points: The sensation of pungency is significantly reduced as compared to that of the control.

### (Clean aroma)

8 points: The clean aroma is the same as that of the control.
6 points: The clean aroma is somewhat deteriorated as compared to that of the control.
4 points: The clean aroma is deteriorated as compared to that of the control.
2 points: The clean aroma is significantly deteriorated as compared to that of the control.

**[Table 1]**

| **Experiment 1: Preparation and evaluation of alcoholic beverages (alcohol content:** 5%) | | | | | | | |
|---|---|---|---|---|---|---|---|
| **Sample** | **1-1 (Control)** | **1-2 (Com. Ex.)** | **1-3** | **1-4** | **1-5 (Com. Ex.)** | **1-6** | **1-7** |
| **Chitosan (MW: 60 kDa)** | 0 ppm | 0.1 ppm | 1 ppm | 5 ppm | **10 ppm** | 1 ppm | 1 ppm |
| **Acidulant** | Citric acid | Citric acid | Citric acid | Citric acid | Citric acid | **Malic acid** | Lactic acid |
| **Piquant pugency** | -8 | -6 | -5 | -4 | -3 | -5 | -5 |
| **Clean aroma** | 8 | 8 | 7 | 6 | 1 | 7 | 7 |

The results in Table 1 revealed that, by adding a small amount of chitosan to packaged alcoholic beverages, a sensation of piquant pungency derived from an alcohol was alleviated successfully while the beverages were allowed to retain their clean aroma. Also, it was found that according to the present invention, alcoholic beverages with excellent aroma profiles were produced successfully even using malic acid or lactic acid as an acidulant (Sample Nos. 1-6 and 1-7).

### Experiment 2: Production and evaluation of packaged alcoholic beverages

Different packaged carbonated alcoholic beverages with an alcohol content of 8.5 v/v% were produced and evaluated based on the table given below (CO₂ gas pressure: 1.5 kgf/cm²). An alcohol (neutral spirits; alcohol content: 59 v/v%), an acidulant (citric acid), chitosan (average degree of polymerization: about 50; average molecular weight: about 5 kDa), and a citrus flavoring (D-limonene, produced by Nacalai Tesque, Inc.) were sequentially added to pure water and mixed with carbonic water to prepare unheated packaged alcoholic beverages which were not subj ected to heat sterilization. In this experiment, the acidulant citric acid and the citrus flavoring limonene were added to the beverages to concentrations of 0.3% (3000 ppm) and 15 ppm, respectively. The beverages had a pH of about 2.5, a Brix value of about 0.3, and an acidity of about 0.3 g/100 mL (in terms of citric acid).

The obtained beverage samples were subjected to sensory evaluation by following the same procedure as in Experiment 1 except that Sample No. 2-1 was used as a control.

**[Table 2]**

| **Experiment 2: Preparation and evaluation of alcoholic beverages (alcohol content: 8.5%, CO₂ pressure: 1.5 kgf/cm²)** | | | | | |
|---|---|---|---|---|---|
| | **2-1 (Control)** | **2-2 (Com. Ex.)** | **2-3** | **2-4** | **2-5 (Com. Ex.)** |
| **Chitosan (MW: 5 kDa)** | 0 ppm | 0.1 ppm | 1 ppm | 5 ppm | 10 ppm |
| **Limonene** | 15 ppm | 15 ppm | 15 ppm | 15 ppm | 15 ppm |
| **Piquant pungency** | -8 | -6 | -5 | -3 | -2 |
| **Clean aroma** | 8 | 8 | 7 | 6 | 1 |

The results in Table 2 revealed that, by adding a small amount of chitosan even to packaged shochu-based cocktail beverages containing a flavoring, a sensation of piquant pungency derived from an alcohol was alleviated successfully while the beverages were allowed to retain their clean aroma. Also, the same effect as in Experiment 1 was achieved even by addition of chitosan with a molecular weight of as low as 5 kDa.

## Claims

1. A packaged alcoholic beverage having a chitosan content of from 0.1 to 5 ppm and an alcohol content of from 1 to 10 v/v%.

2. The beverage according to claim 1, wherein the beverage is an unheated packaged alcoholic beverage.

3. The beverage according to claim 1 or 2, wherein the chitosan has a molecular weight of from 1 to 100 kDa.

4. The beverage according to any of claims 1-3, wherein the beverage contains one or more acidulants selected from citric acid, malic acid, and lactic acid.

5. A method for producing a packaged alcoholic beverage, the method comprising the step of preparing an alcoholic beverage having a chitosan content of from 0.1 to 5 ppm and an alcohol content of from 1 to 10 v/v%.

6. A method for reducing a sensation of alcohol pungency in a packaged alcoholic beverage, the method comprising the step of adding from 0.1 to 5 ppm of chitosan to an alcoholic beverage having an alcohol content of from 1 to 10 v/v%.

## Patentansprüche

1. Ein verpacktes alkoholisches Getränk mit einem Chitosangehalt von 0,1 bis 5 ppm und einem Alkoholgehalt von 1 bis 10 Vol.-%.

2. Das Getränk nach Anspruch 1, wobei das Getränk ein nicht erhitztes verpacktes alkoholisches Getränk ist.

3. Das Getränk nach Anspruch 1 oder 2, wobei das Chitosan ein Molekulargewicht von 1 bis 100 kDa aufweist.

4. Das Getränk nach einem der Ansprüche 1-3, wobei das Getränk ein oder mehrere Säuerungsmittel, ausgewählt aus Zitronensäure, Apfelsäure und Milchsäure, enthält.

5. Ein Verfahren zur Herstellung eines verpackten alkoholischen Getränks, wobei das Verfahren den Schritt der Zubereitung eines alkoholischen Getränks mit einem Chitosangehalt von 0,1 bis 5 ppm und einem Alkoholgehalt von 1 bis 10 Vol.-% umfasst.

6. Ein Verfahren zur Verringerung eines Gefühls von Alkoholschärfe in einem verpackten alkoholischen Getränk, wobei das Verfahren den Schritt der Zugabe von 0,1 bis 5 ppm Chitosan zu einem alkoholischen Getränk mit einem Alkoholgehalt von 1 bis 10 Vol.-% umfasst.

## Revendications

1. Boisson alcoolisée conditionnée ayant une teneur en chitosane de 0,1 à 5 ppm et une teneur en alcool de 1 à 10 % v/v.

2. Boisson selon la revendication 1, dans laquelle la boisson est une boisson alcoolisée conditionnée non chauffée.

3. Boisson selon la revendication 1 ou 2, dans laquelle le chitosane a un poids moléculaire de 1 à 100 kDa.

4. Boisson selon l'une quelconque des revendications 1 à 3, dans laquelle la boisson contient un ou plusieurs acidulants choisis parmi l'acide citrique, l'acide malique et l'acide lactique.

5. Méthode pour produire une boisson alcoolisée conditionnée, la méthode comprenant l'étape de préparation d'une boisson alcoolisée ayant une teneur en chitosane de 0,1 à 5 ppm et une teneur en alcool de 1 à 10 % v/v.

6. Méthode pour réduire la sensation d'âcreté de l'alcool dans une boisson alcoolisée conditionnée, la méthode comprenant l'étape d'addition de 0,1 à 5 ppm de chitosane à une boisson alcoolisée ayant une teneur en alcool de 1 à 10 % v/v.
